# EUROPÄISCHE PATENTSCHRIFT

(11) **EP 3 446 922 B1**
(45) Veröffentlichungstag und Bekanntmachung des Hinweises auf die Patenterteilung: **26.05.2021**
(21) Anmeldenummer: 18187889.3
(22) Anmeldetag: 08.08.2018
(51) Int. Cl.: B60Q 1/38, B60R 13/00, F21W 103/20

(54) **BLINKLEUCHTE UND VERFAHREN ZUM BETREIBEN EINER BLINKLEUCHTE EINES KRAFTFAHRZEUGS**
FLASHING LIGHT AND METHOD FOR OPERATING A FLASHING LIGHT OF A MOTOR VEHICLE
CLIGNOTANT ET PROCÉDÉ DE FONCTIONNEMENT D'UN CLIGNOTANT D'UN VÉHICULE AUTOMOBILE

(30) Priorität: 23.08.2017 DE 102017119255
(43) Veröffentlichungstag der Anmeldung: 27.02.2019
(73) Patentinhaber: MAN Truck & Bus SE, 80995 München (DE)
(72) Erfinder: Haider, Michael, 83126 Flintsbach (DE)
(74) Vertreter: v. Bezold & Partner Patentanwälte - PartG mbB

(56) Entgegenhaltungen:
- WO-A1-2008/122208
- DE-A1-102005 001 122
- DE-A1-102016 100 332
- DE-U1-202015 100 207
- US-A1- 2011 156 894
- US-A1- 2016 297 366

## Beschreibung

Die Erfindung betrifft ein Verfahren zum Betreiben einer Blinkleuchte eines Kraftfahrzeugs sowie eine Blinkleuchte für ein Kraftfahrzeug.

Die Verwendung von Blinkleuchten, auch als Blinklichter oder Blinker bezeichnet, ist aus dem Stand der Technik seit Langem bekannt. Blinkleuchten werden in Kraftwagen als Fahrtrichtungsanzeiger bereitgestellt. Eine Blinkleuchte ist eine Lichtquelle, die durch eine technische Einrichtung periodisch ihre Helligkeit ändern kann. Sie wird innerhalb eines Blinkzyklus abwechselnd an- und wieder ausgeschaltet, d. h., jeder Blinkzyklus besteht aus einer aktiven Periode, während welcher die Blinkleuchte leuchtet, und einer inaktiven Periode, während welcher die Blinkleuchte dunkel bleibt. Die Blinkfrequenz beträgt dabei typischerweise zwischen 1 und 2 Hz.

Aus dem Stand der Technik sind insbesondere Blinkleuchten bekannt, die die anzuzeigende Fahrtrichtung dadurch betonen, dass in einer jeweiligen Blinkleuchte eine Reihe von Leuchtmitteln nacheinander eingeschaltet wird, so dass ein Lauflichteffekt oder Animationseffekt innerhalb der Blinkleuchte entsteht. Die Richtung, in welcher sich das Lauflicht innerhalb einer Blinkleuchte bewegt, veranschaulicht dem Betrachter dann zusätzlich den bevorstehenden Fahrtrichtungswechsel. Eine derartige Blinkleuchte ist beispielsweise in den Offenlegungsschriften DE 101 30 259 A1 und DE 10 2011 119 230 A1 offenbart.

So offenbart die Offenlegungsschrift DE 10 2011 119 230 A1 ein Verfahren zum Betreiben einer Blinkleuchte, bei welcher zur Erzeugung eines Lauflichteffekts innerhalb der Blinkleuchte eine Mehrzahl von jeweils wenigstens eine Leuchtdiode umfassenden LED-Gruppen in einer Reihe angeordnet ist. Für eine Fahrtrichtungsanzeige wird innerhalb jedes Blinkzyklus ausgehend von einem ausgeschalteten Zustand aller LED-Gruppen zunächst eine Anfangsgruppe eingeschaltet. Danach werden ausgehend von der Anfangsgruppe der Reihe nach die übrigen LED-Gruppen nacheinander hinzugeschaltet, bis sämtliche LED-Gruppen eingeschaltet sind. Anschließend werden sämtliche LED-Gruppen für eine vorgegebene Zeitdauer in dem eingeschalteten Zustand gehalten. Dann werden alle LED-Gruppen wieder ausgeschaltet.

So offenbart die Offenlegungsschrift die US 2016/0297366 A1 ein Warnanzeigesystem für ein Fahrzeug umfassend eine Anzeige zum Bereitstellen von sichtbaren Signalen innerhalb einer reflektierenden Oberfläche eines Rückspiegels, die betriebsmäßig mit mindestens einem Blinkersteuersystem des Fahrzeugs verbunden ist. Der Indikator wird durch eine Vielzahl von Bildern definiert, die sequentiell aktiviert werden, um einem Betrachter ein animiertes Bild zu präsentieren. Die Vielzahl von Bildern wird durch eine Vielzahl von gedruckten LED-Symbolen bereitgestellt, die nebeneinander innerhalb der reflektierenden Rücksichtfläche angeordnet sind.

Es ist eine Aufgabe der Erfindung, den bekannten Stand der Technik weiterzubilden, um ein verbessertes Verfahren zum Betreiben einer Blinkleuchte eines Kraftfahrzeugs und eine verbesserte Blinkleuchte bereitzustellen. Es ist insbesondere eine Aufgabe der Erfindung, eine verbesserte Blinkleuchte bereitzustellen, mittels welcher eine verbesserte Signalisierung des Abbiegevorgangs erzielt werden kann oder mittels welcher eine fahrzeugspezifische oder herstellerspezifische Individualisierung der Blinkleuchte realisiert werden kann.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein Verfahren zum Betreiben einer Blinkleuchte eines Kraftfahrzeugs bereitgestellt, bei dem eine Leuchtfläche der Blinkleuchte zum Signalisieren eines Fahrtrichtungswechsels derart angesteuert wird, dass ein Lauflichteffekt erzielt wird. Derartige einen Lauflichteffekt erzeugende Blinkleuchten sind an sich aus dem Stand der Technik bekannt. Zur Erzielung des Lauflichteffekts werden in einer Blinkleuchte in einer Reihe angeordnete Leuchtmittel oder allgemein in einer Reihe angeordnete Teilbereiche der Leuchtfläche nacheinander eingeschaltet, so dass ein Lauflichteffekt oder Animationseffekt entsteht. Dieser Lauflichteffekt einer Blinkleuchte wird auch als Wischblinken bezeichnet, da durch das Lauflicht ein optischer Wischeffekt erzeugt wird. Dabei erfolgt ein Wischen des Lichts in der Blinkleuchte bzw. die Richtung des Lauflichts von links nach rechts oder von rechts nach links, je nachdem, in welche Richtung der Abbiegevorgang erfolgt.

Zur Erzielung des Lauflichteffekts wird mindestens ein Symbol auf der Leuchtfläche angezeigt. Anders ausgedrückt wird mindestens ein Symbol zur Erzeugung des Lauflichteffekts verwendet. Das mindestens eine Symbol wird dabei während eines Blinkzyklus in der Laufrichtung des Lauflichteffekts nacheinander in verschiedenen Teilbereichen der Leuchtfläche der Blinkleuchte angezeigt, entweder derart, dass das mindestens eine Symbol nacheinander durch alle Teilbereiche wandert oder nacheinander in allen Teilbereichen angezeigt wird, bis es in allen Teilbereich gleichzeitig zu sehen ist. Unter einem Symbol wird ein grafisches oder alphanumerisches Zeichen verstanden. Die Verwendung von einem oder mehreren Symbolen zur Erzielung des Lauflichteffekts bietet den besonderen Vorzug, dass die Signalwirkung bestehender Blinkleuchten verbessert oder der mittels der Blinkleuchte übertragende Informationsgehalt erweitert werden kann, was nachfolgend noch detaillierter erläutert wird. Erfindungsgemäß umfasst das mindestens eine Symbol ein die Fahrzeuggattung kennzeichnendes Symbol und/oder ein die Fahrzeuggattung darstellendes Piktogramm. Unterschiedliche Fahrzeuggattungen im Nutzfahrzeugbereich können beispielsweise sein: Omnibus, Lastkraftwagen, Lastkraftwagen mit Auflieger, Lastkraftwagen ohne Auflieger und/oder Landfahrzeug etc. Das Piktogramm kann insbesondere ein einen Omnibus oder einen Lastkraftwagen darstellendes Piktogramm sein. Das mindestens eine Symbol kann dazu genutzt werden, um mittels der Blinkleuchte neben deren Hauptzweck, d. h. der Signalisierung eines bevorstehenden Fahrtrichtungswechsels, eine weitere Botschaft zu übermitteln, insbesondere, um mittels einer fahrzeugspezifischen oderherstellerspezifischen Individualisierung der Blinkleuchte Informationen betreffend die Fahrzeuggattung oder den Fahrzeughersteller zu übermitteln.

Gemäß einer besonders bevorzugten Ausführungsform zeigt eine Ausrichtung des Symbols eine dem Blinkvorgang entsprechende Abbiegerichtung an. Anders ausgedrückt ist das mindestens eine Symbol, das im Rahmen des Lauflichteffekts angezeigt wird, so ausgerichtet, dass das mindestens eine Symbol in die Abbiegerichtung, d. h. "links" oder "rechts", zeigt. Dies erfordert, dass das Symbol eine Form aufweist, die in einer bestimmten Richtung ausgerichtet werden kann. Beispielsweise kann das mindestens eine Symbol ein Grafikelement umfassen. Beispielsweise kann das Grafikelement ein Pfeil oder ein Dreieck sein. Ein Pfeil oder ein Dreieck können jeweils auf einfach erkennbare Weise so ausgerichtet werden, dass das Symbol in die Abbiegerichtung zeigt. Bei einer hinteren Blinkleuchte, mittels derer ein Abbiegevorgang - in Fahrtrichtung gesehen - nach rechts signalisiert werden soll, könnte zum Beispiel der Lauflichteffekt mittels nacheinander angezeigten Pfeilen realisiert werden, die - in Fahrtrichtung von hinten aus auf das Fahrzeug gesehen - nach rechts zeigen. Als Symbol kann auch ein ein Fahrzeug darstellendes Piktogramm verwendet werden, das so angezeigt wird, dass dessen Fahrtrichtung je nach Abbiegevorgang nach links oder rechts zeigt.

Das mindestens eine Symbol kann somit zur Anzeige der anvisierten Abbiegerichtung genutzt werden, um dem Betrachter zusätzlich den bevorstehenden Fahrtrichtungswechsel zu veranschaulichen und zu verdeutlichen.

Gemäß einer weiteren Ausführungsform kann das mindestens eine Symbol ein den Fahrzeughersteller kennzeichnendes Symbol, insbesondere ein Markenlogo, umfassen.

Gemäß einer weiteren Ausführungsform kann das mindestens eine Symbol mehrere alphanumerische Zeichen umfassen, die zur Erzielung des Lauflichteffekts in einem Blinkzyklus in einer vorbestimmten Reihenfolge nacheinander auf der Leuchtfläche angezeigt werden und in der vorbestimmten Reihenfolge einen der Hersteller des Fahrzeugs kennzeichnenden oder das Fahrzeug kennzeichnenden Markennamen ergeben.

Gemäß einem weiteren Aspekt kann die Leuchtfläche ausgehend von einem ersten seitlichen Endbereich bis zu einem gegenüberliegenden zweiten seitlichen Endbereich in mehrere Teilbereiche unterteilt sein, in denen jeweils ein Symbol anzeigbar ist. Die Leuchtfläche kann beispielsweise als horizontaler Leuchtstreifen ausgeführt sein. Die Leuchtfläche kann als LED-Display ausgebildet sein, so dass die Teilbereiche unterschiedliche, frei ansteuerbare Anzeigebereiche des LED-Displays darstellen.

Die Leuchtfläche kann jedoch auch durch eine Anordnung einer Mehrzahl von LEDs gebildet sein, wobei zur Ausbildung der mehreren Teilbereiche eine Mehrzahl von wenigstens eine Leuchtdiode umfassenden LED-Gruppen in einer Reihe angeordnet ist. Hierbei kann jede LED-Gruppe einen der Teilbereiche ausbilden. Die Leuchtdioden jeweils einer LED-Gruppe sind vorzugsweise so angeordnet, dass sie das Symbol oder das mindestens eine Symbol formgebend nachbilden.

Hierbei kann in einem Blinkzyklus ausgehend von einem ausgeschalteten Zustand aller LED-Gruppen zunächst eine Anfangsgruppe eingeschaltet sein, danach können ausgehend von der Anfangsgruppe der Reihe nach die übrigen LED-Gruppen nacheinander hinzugeschaltet werden, bis sämtliche LED-Gruppen eingeschaltet sind, anschließend sämtliche LED-Gruppen für eine vorgegebene Zeitdauer im eingeschalteten Zustand gehalten werden und schließlich alle LED-Gruppen wieder ausgeschaltet werden.

Eine andere Möglichkeit der erfindungsgemäßen Realisierung sieht vor, dass zur Ausbildung der mehreren Teilbereiche eine Mehrzahl von Leuchtelementen in einer Reihe angeordnet ist, wobei die Leuchtelemente jeweils aus einem lichtdurchlässigen, lichtleitenden oder lichtreflektierenden Material gebildet sind und eine dem anzuzeigenden Symbol entsprechende Formgebung aufweisen, wobei jedem Leuchtelement eine Beleuchtungseinrichtung zugeordnet ist, mittels derer jedes der Leuchtelemente wahlweise beleuchtet werden kann, so dass das Leuchtelement im beleuchteten Zustand als leuchtendes Symbol in der Blinkleuchte erscheint.

Zur Erzielung des Lauflichteffekts gibt es verschiedene Möglichkeiten. Gemäß einer ersten Variante kann das auf der Leuchtfläche angezeigte Symbol in einem Blinkzyklus von einer Seite der Leuchtfläche auf die andere Seite der Leuchtfläche wandern. Mit anderen Worten geht das Symbol, das sich in einem bestimmten Teilbereich gerade im leuchtenden Zustand befindet, in den nicht-leuchtenden Zustand über, wenn oder kurz nachdem das Symbol in dem benachbarten Teilbereich der Leuchtfläche, d. h. der in Laufrichtung des Lauflichteffekts nachfolgende Teilbereich, von dem nicht-leuchtenden in den leuchtenden Zustand übergeht. In diesem Sinne wandert das leuchtende Symbol in einem Blinkzyklus von einem seitlichen Ende zum anderen seitlichen Ende der Leuchtfläche.

Eine weitere Variante sieht hierbei vor, den Lauflichteffekt mit einer Variation der Leuchtstärken zu kombinieren. Hierbei können mindestens zwei, vorzugsweise drei Symbole zur Erzeugung des Lauflichteffekts in einem Blinkzyklus von einer Seite der Leuchtfläche auf die andere Seite der Leuchtfläche wandern und die mindestens zwei Symbole dabei mit zueinander unterschiedlichen Leuchtstärken angezeigt werden, derart, dass das jeweils zur Erzeugung des Lauflichteffekts zuletzt aktivierte Symbol im Vergleich zum davor aktivierten Symbol mit stärkerer Leuchtstärke angezeigt wird. Beispielsweise kann das vorletzte Symbol mit 50 % Leuchtstärke im Vergleich zum letzten Element angezeigt werden. Das vorvorletzte kann gemäß einer weiteren Variante ebenfalls mit einer zum vorletzten Element reduzierten Leuchtstärke, z. B. 25 % ,angezeigt werden. Mit anderen Worten geht ein Symbol oder Element der Leuchtfläche, nachdem es zur Erzeugung des Lauflichteffekt vom ausgeschalteten Zustand in den eingeschalteten bzw. aktivierten Zustand übergegangen ist, anschließend nicht direkt wieder in den ausgeschalteten Zustand über, sondern nimmt vorher noch Übergangszustände mit reduzierter Lichtstärke ein und geht dann erst wieder in den ausgeschalteten Zustand über..

Dieser Aspekt ist auch analog für Ausführungsvarianten realisierbar, bei denen Teilelemente des Symbols zur Erzeugung des Lauflichteffekts nacheinander in Laufrichtung erleuchtet werden.

Diese Variante ist z. B. bei allen Lauflichtern mit vereinzelten LED, die mittels Strom angesteuert werden, sowie für Displays möglich, bei denen lediglich die Anzahl der erleuchteten Pixel reduziert wird, um die Leuchtstärke anzupassen.

Gemäß einer zweiten Variante wandert das Symbol zur Erzielung des Lauflichteffekts nicht nacheinander durch alle Teilbereiche der Leuchtfläche. Vielmehr wird das mindestens eine Symbol zeitlich versetzt nacheinander in allen Teilbereichen hinzugeschaltet, d. h. angezeigt, bis in allen Teilbereichen ein Symbol zu sehen ist. Anschließend werden sämtliche Symbole in allen Teilbereich für eine vorgegebene Zeitdauer in dem leuchtenden Zustand gehalten. Dann werden alle Teilbereiche wieder ausgeschaltet, d. h. die den Teilbereichen zugeordnete Symbolen in den nicht-leuchtenden Zustand überführt, so dass das Symbol in keinem Teilbereich mehr zu sehen ist. Anders ausgedrückt wird der Lauflichteffekt bei dieser Variante wie folgt erzeugt: In einem Blinkzyklus geht ausgehend von einem nicht leuchtenden Zustand aller Teilbereiche zunächst das mindestens eine einem ersten Teilbereich zugeordnete Symbol in den leuchtenden Zustand über, danach gehen ausgehend hiervon der Reihe nach die Symbole der in seitlicher Richtung nachfolgenden übrigen Teilbereiche nacheinander in den leuchtenden Zustand über, bis die Symbole in sämtlichen Teilbereichen sich im leuchtenden Zustand befinden. Anschließend werden die Symbole sämtlicher Teilbereiche für eine vorgegebene Zeitdauer im leuchtenden Zustand gehalten. Schließlich gehen die Symbole aller Teilbereiche wieder in den unbeleuchteten Zustand über.

Gemäß einem zweiten allgemeinen Gesichtspunkt der Erfindung wird eine Blinkleuchte eines Kraftfahrzeugs zur Anzeige eines Fahrtrichtungswechsels bereitgestellt. Die Blinkleuchte umfasst eine Leuchtfläche und eine Steuereinrichtung, mittels derer die Leuchtfläche zum Signalisieren eines Fahrtrichtungswechsels derart ansteuerbar ist, dass ein Lauflichteffekt erzielt wird. Hier ist die Steuereinrichtung ausgebildet, das Verfahren zum Betreiben einer Blinkleuchte eines Kraftfahrzeugs durchzuführen.

Zur Vermeidung von Wiederholungen sollen rein verfahrensgemäß offenbarte Merkmale auch als vorrichtungsgemäß offenbart gelten. Die vorgenannten Aspekte und erfindungsgemäßen Merkmale, die in Zusammenhang mit dem Verfahren besprochen wurden, gelten somit auch für die Blinkleuchte.

Die Erfindung betrifft ferner ein Kraftfahrzeug, mit einer Blinkleuchte, wie in diesem Dokument beschrieben. Das Kraftfahrzeug kann ein Nutzfahrzeug sein, insbesondere ein Lastkraftwagen (LKW) oder ein Omnibus.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Illustration eines Verfahrens zum Betreiben einer Blinkleuchte eines Kraftfahrzeugs und ein Blockdiagram einer Vorrichtung gemäß einer Ausführungsform der Erfindung;
- Figur 2: schematisch eine Realisierung eines Lauflichteffekts einer Blinkleuchte unter Verwendung eines Symbols gemäß einer weiteren Ausführungsform der Erfindung;
- Figur 3: schematisch eine Realisierung eines Lauflichteffekts einer Blinkleuchte unter Verwendung eines Symbols gemäß einer weiteren Ausführungsform der Erfindung;
- Figur 4: schematisch eine Realisierung eines Lauflichteffekts einer Blinkleuchte unter Verwendung mehrerer Symbole als weiteres Beispiel außerhalb des Erfindungsumfangs;

- Figur 5: schematisch eine Realisierung eines Lauflichteffekts einer Blinkleuchte unter Verwendung eines Symbols als weiteres Beispiel außerhalb des Erfindungsumfangs;

- Figur 6: schematisch eine Realisierung eines in eine Blinkleuchte integrierten Symbols als weiteres Beispiel außerhalb des Erfindungsumfangs;

- Figur 7: schematisch eine weitere Realisierung eines in eine Blinkleuchte integrierten Symbols als weiteres Beispiel außerhalb des Erfindungsumfangs; und

- Figuren 8A und 8B: schematisch eine weitere Realisierung eines in eine Blinkleuchte integrierten Symbols als weiteres Beispiel außerhalb des Erfindungsumfangs.

Gleiche oder funktional äquivalente Elemente sind in allen Figuren mit denselben Bezugszeichen bezeichnet und zum Teil nicht gesondert beschrieben.

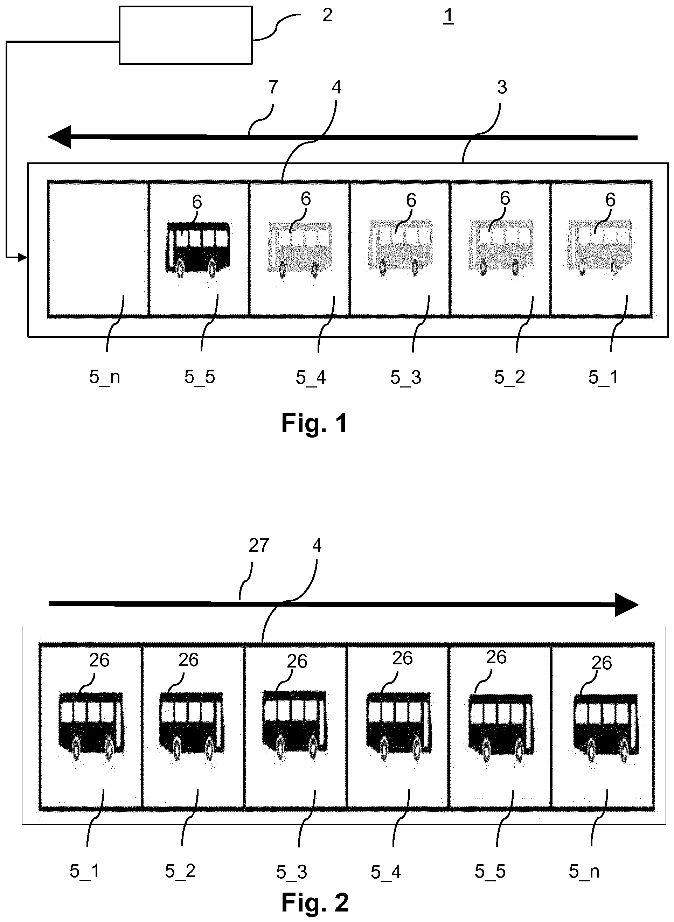

Figur 1 zeigt einerseits ein Blockdiagram einer Blinkleuchte 1 gemäß einer Ausführungsform der Erfindung und dient gleichzeitig zur Illustration eines Verfahrens zum Betreiben einer Blinkleuchte gemäß einer Ausführungsform.

Die Blinkleuchte 1 umfasst eine in einem Gehäuse 3 angeordnete Leuchtfläche 4, welche aus einem Leuchtelement oder aus mehreren Leuchtelementen bestehen kann, und eine Steuereinrichtung 2. Über die Steuereinrichtung 2 wird die Leuchtfläche 4 angesteuert, derart, dass diese bei einem Blinkervorgang periodisch gemäß der Blinkfrequenz ihr Erscheinungsbild ändert.

Hierbei wird insbesondere ein Lauflichteffekt unter Verwendung eines Symbols 6 erzeugt.

Figur 1 illustriert eine beispielhafte Realisierung eines derartigen Lauflichteffekts. Die Leuchtfläche 4 weist hierzu mehrere Teilflächen 5_1 bis 5_n auf, wobei vorliegend lediglich beispielhaft n = 6 ist. In jeder der Teilflächen 5_1 bis 5_n kann ein Symbol 6 aufleuchten. Vorliegend ist das Symbol 6 ein Piktogramm, das schematisch einen Omnibus zeigt. In dem beschriebenen Ausführungsbeispiel ist das Kraftfahrzeug, an dem die Blinkleuchte 1 vorgesehen ist, ein Omnibus.

Figur 1 illustriert einen Lauflichteffekt zum Linksabbiegen. Zu Beginn eines Blinkzyklus leuchtet das Symbol 6 zuerst in der ersten Teilfläche 5_1 der Leuchtfläche 4 auf. Anschließend leuchtet das Symbol 6 in der zweiten Teilfläche 5_2 auf, während es in der ersten Teilfläche 5_1 wieder erlischt. Anschließend leuchtet das Symbol 6 in der dritten Teilfläche 5_3 auf, während es in der zweiten Teilfläche 5_2 wieder erlischt. Anschließend leuchtet das Symbol 6 in der vierten Teilfläche 5_4 auf, während es in der dritten Teilfläche 5_3 wieder erlischt. Anschließend leuchtet das Symbol 6 in der fünften Teilfläche 5_5 auf, während es in der vierten Teilfläche 5_4 wieder erlischt. Dieser Zustand ist in Figur 1 gezeigt. Die Grauschattierung der Symbole 6 in den Teilflächen 5_1 bis 5_4 soll lediglich illustrieren, dass das Symbol 6 hier bereits angezeigt wurde, jedoch bereits wieder erloschen ist. Das Symbol 6 "wandert" bzw. "läuft" somit vom rechten seitlichen Ende der Leuchtfläche 4 zum linken seitlichen Ende bis zur Teilfläche 5_n. In diesem Sinne wird somit unter Verwendung des Symbols 6 ein Lauflichteffekt bei einem Blinkvorgang erzeugt. Der Pfeil 7 gibt die Laufrichtung des Symbols 6 an. Diese animierte Bewegung des Symbols 6 wird bei jedem Blinkzyklus wiederholt. Die Fahrtrichtung des angezeigten Omnibusses 6 zeigt hier nach links und somit in die Richtung des anvisierten Fahrtrichtungswechsels. Das Symbol 6 kann somit zur Anzeige der anvisierten Abbiegerichtung genutzt werden, um dem Betrachter zusätzlich den bevorstehenden Fahrtrichtungswechsel zu verdeutlichen.

Bei einem Abbiegevorgang nach rechts läuft bzw. wandert der Omnibus 6 entsprechend umgekehrt vom linken seitlichen Endbereich der Leuchtfläche 3 hin bis zum rechten seitlichen Endbereich, wobei der Omnibus 6 dann so dargestellt wird, dass seine Fahrtrichtung nach rechts zeigt.

Figur 2 zeigt schematisch eine Realisierung eines Lauflichteffekts einer Blinkleuchte unter Verwendung eines Symbols gemäß einer weiteren Ausführungsform der Erfindung. Figur 2 illustriert beispielhaft einen Abbiegevorgang nach rechts. Entsprechend zeigt die Laufrichtung 27 des Lauflichteffekts ebenfalls nach rechts. Als Symbol 26 wird wiederum ein Piktogramm eines Omnibusses verwendet, der hier in Fahrtrichtung nach rechts dargestellt ist, d. h. in Richtung des durch die Blinkleuchte signalisierten Fahrtrichtungswechsels.

Die Besonderheit dieser Ausführungsvariante liegt darin, dass der Lauflichteffekt visuell unterschiedlich im Vergleich zur Variante der Figur 1 erzeugt wird. Gemäß der in Figur 1 gezeigten Variante wandert das Symbol 6 zur Erzielung des Lauflichteffekts nacheinander durch alle Teilbereiche der Leuchtfläche, wobei immer nur in einem Teilbereich ein Omnibus 6 erleuchtet angezeigt wird.

Gemäß der in Figur 2 gezeigten Variante wird das Symbol 6 vielmehr zeitlich versetzt nacheinander in allen Teilbereichen 5_1 bis 5_n hinzugeschaltet, d. h. angezeigt, bis in allen Teilbereichen 5_1 bis 5_n ein Symbol zu sehen ist. Ein Blinkzyklus geht zunächst von einem nicht leuchteten Zustand aller Teilbereiche aus, d. h., in keinem der Teilbereiche ist der Omnibus 6 erleuchtet dargestellt. Anschließend erscheint der Omnibus 6 in dem ersten Teilbereich 5_1, der sich am linken seitlichen Endbereich befindet, in einem erleuchteten Zustand. Ausgehend hiervon gehen der Reihe nach die Symbole 6 in den nachfolgenden Teilbereichen nacheinander in den leuchtenden Zustand über, bis die Symbole in sämtlichen Teilbereichen sich im leuchtenden Zustand befinden. Dieser Zustand ist in Figur 2 dargestellt. Anschließend werden die Symbole 6 sämtlicher Teilbereiche für eine vorgegebene Zeitdauer im leuchtenden Zustand gehalten. Schließlich gehen die Symbole 6 aller Teilbereiche wieder in den unbeleuchteten Zustand über. Der Blinkzyklus beginnt von Neuem. Auch hier entsteht für den Betrachter ein Lauflichteffekt in der Richtung 27.

Bei einem Abbiegevorgang nach links ist die Richtung des Lauflichteffekts umgekehrt, wobei der Omnibus 6 dann so dargestellt wird, dass seine Fahrtrichtung nach links zeigt.

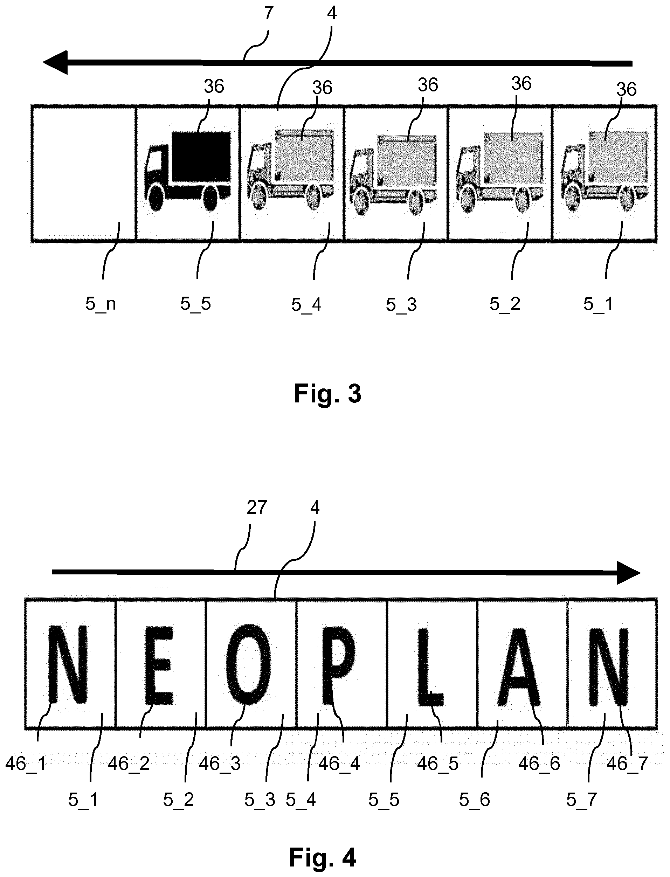

Figur 3 zeigt schematisch eine Realisierung eines Lauflichteffekts einer Blinkleuchte gemäß einer weiteren Variante. Diese Variante entspricht prinzipiell der Ausführungsform der Figur 1, mit dem Unterschied, dass als Symbol 36 nun ein Piktogramm eines Lastkraftwagens verwendet wird. Eine derartige Blinkleuchte eignet sich für den Einsatz bei einem Lastkraftwagen (LKW). Das für die Erzeugung des Lauflichteffekts verwendete Symbol 36 in Form eines LKW-Piktogramms stellt somit in diesem Fall ein für die Fahrzeuggattung kennzeichnendes Symbol dar.

Figur 4 zeigt schematisch eine Realisierung eines Lauflichteffekts einer Blinkleuchte als weiteres Beispiel außerhalb des Erfindungsumfangs. Es ist ein Blinkvorgang für einen Fahrtrichtungswechsel nach rechts dargestellt. Zur Erzeugung des Lauflichteffekts wird hier nicht ein einziges Symbol verwendet, das in unterschiedlichen Teilbereichen der Anzeigefläche 4 dargestellt wird, sondern es werden unterschiedliche Symbole in Form von alphanumerischen Zeichen 46_1 bis 46_7 verwendet. Hierbei werden diese alphanumerischen Zeichen 46_1 bis 46_7 zur Erzielung des Lauflichteffekts in einem Blinkzyklus in einer vorbestimmten Reihenfolge nacheinander auf der Leuchtfläche angezeigt, nämlich beginnend mit dem ersten Zeichen 46_1, das in der ersten Teilfläche 5_1 angezeigt wird, gefolgt von dem zweiten Zeichen 46_2, das in der zweiten Teilfläche 5_2 angezeigt wird usw., bis schließlich in jeder Teilfläche das der Teilfläche zugeordnete Zeichen dargestellt ist. In der vorbestimmten Reihenfolge ergibt die Zeichenfolge einen den Hersteller des Fahrzeugs kennzeichnenden Markennamen, hier "NEOPLAN", was einen Markennamen eines Herstellers von Omnibusses bezeichnet. Anschließend werden sämtliche Zeichen 46_1 bis 46_7 für eine vorgegebene Zeitdauer in dem erleuchteten Zustand gehalten. Dann erlöschen alle Zeichen 46_1 bis 46_7 wieder. Der nächste Blinkzyklus beginnt.

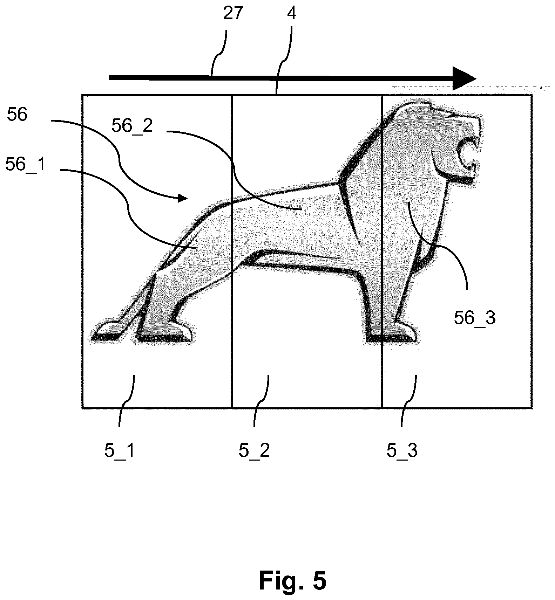

Figur 5 zeigt schematisch eine Realisierung eines Lauflichteffekts einer Blinkleuchte als weiteres Beispiel außerhalb des Erfindungsumfangs. Es ist ein Blinkvorgang für einen Fahrtrichtungswechsel nach rechts dargestellt. Die Besonderheit dieser Ausführungsvariante liegt darin, dass auf der Leuchtfläche 4 der Blinkleuchte ein Markenlogo des Fahrzeugherstellers zur Erzeugung des Lauflichteffekts verwendet wird. Beispielhaft besteht hier das Markenlogo des Herstellers aus einem grafisch dargestellten Löwen 56, dessen Gesamterscheinungsbild während eines Blinkzyklus sukzessive aus den drei Einzelbildern 56_1, 56_2 und 56_3 zusammengebaut wird. Zuerst wird das Teilbild 56_1 im Teilbereich 5_1 der Leuchtfläche 4 im erleuchteten Zustand angezeigt, dann kommt das Teilbild 56_2 im Teilbereich 5_2 hinzu, dann kommt das Teilbild 56_3 im Teilbereich 5_3 hinzu. Anschließend werden sämtliche Teilbilder 56_1 bis 56_3 für eine vorgegebene Zeitdauer in dem erleuchteten Zustand gehalten. Dann erlöschen alle 56_1 bis 56_3 wieder. Der nächste Blinkzyklus beginnt. Der dargestellte Löwe 56 baut sich in einem Blinkzyklus somit sukzessive auf und erzeugt somit ebenfalls einen visuellen Lauflichteffekt. Bei einem Abbiegevorgang nach links wird der Löwe entsprechend mit Blickrichtung nach links dargestellt und baut sich von rechts nach links auf.

Es wird betont, dass zur Erzeugung des Lauflichteffekts der Blinkleuchte mittels der beschriebenen visuellen Darstellung der Symbole unterschiedliche technische Ansätze verwendet werden können. Beispielsweise kann die Leuchtfläche in Form eines LED-Displays realisiert sein, das den Vorzug bietet, dass die einzelnen Teilbereiche des Displays in Bezug auf ihre Darstellungen frei ansteuerbar sind. Die Leuchtfläche kann jedoch auch durch eine Anordnung einer Mehrzahl von LEDs gebildet sein, wobei zur Ausbildung der mehreren Teilbereiche eine Mehrzahl von wenigstens eine Leuchtdiode umfassenden LED-Gruppen in einer Reihe angeordnet ist. Hierbei kann jede LED-Gruppe einen der Teilbereiche ausbilden. Die Leuchtdioden jeweils einer LED-Gruppen sind vorzugsweise so angeordnet, dass sie das Symbol oder das mindestens eine Symbol formgebend nachbilden.

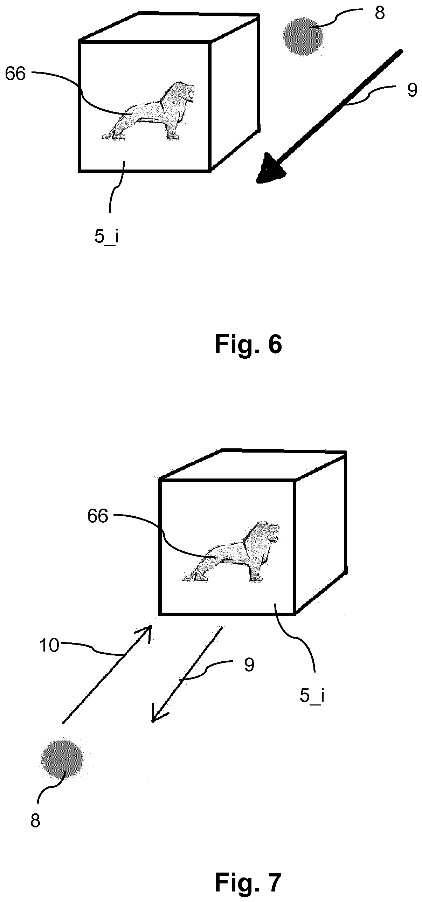

Ein anderer Ansatz außerhalb des Erfindungsumfangs ist in Figur 6 dargestellt. Figur 6 zeigt eine Teilfläche 5_i der Leuchtfläche 4. In dieser Teilfläche 5_i ist ein lichtdurchlässiges, transluzentes oder fluoreszierendes Material vorgesehen, das als Design-Körper formgebend das Symbol, hier z. B. das Löwen-Piktogramm, ausbildet. Dieses Symbol kann direkt mit einer Lichtquelle 8, z. B. einer LED oder Glühlampe, von hinten angestrahlt werden und leuchtet dann auf. Mit dem Bezugszeichen 9 ist die Leuchtrichtung, d. h. die Richtung des von dem Symbol 66 abgestrahlten Lichts, gekennzeichnet. Selbstverständlich kann anstelle eines grafischen Elements auch ein Buchstabe als Symbol verwendet werden. Bei dieser Lösung sind alle Teilflächen der Leuchtfläche 4 entsprechend aufgebaut, und die Steuerung 2 der Blinkleuchte ist ausgebildet, zur Erzielung des Lauflichteffekts die einzelnen Lichtquellen 8 der Teilflächen entsprechend anzusteuern, z. B. zeitversetzt anzusteuern.

Figur 7 zeigt einen alternativen Ansatz außerhalb des Erfindungsumfangs, der sich von dem anhand von Figur 6 erläuterten Ansatz lediglich dadurch unterscheidet, dass der das Symbol 66 ausbildende Design-Körper aus einem lichtreflektierenden Material hergestellt ist und von vorne mittels einer Lichtquelle 8 angestrahlt wird. Entsprechend ist die Anstrahlrichtung 10 entgegengesetzt zur Leuchtrichtung 9 des Symbols 66.

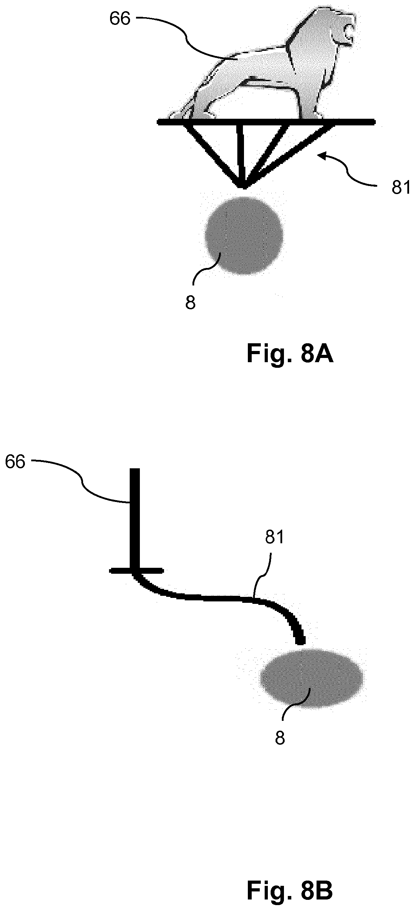

Gemäß einer weiteren Variante außerhalb des Erfindungsumfangs kann das Symbol 66 auch von der Seite oder von unten oder oben angestrahlt werden, so dass dieses aufleuchtet, was in Figur 8A in einer Vorderansicht und in Figur 8B in einer Seitenansicht dargestellt ist. Das Bezugszeichen 8 bezeichnet wiederum die Lichtquelle und das Bezugsteichen 81 einen Lichtleiter, mit dem das von der Lichtquelle 8 erzeugte Licht zum Symbol 66 geleitet wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Blinkleuchte
- 2: Steuereinrichtung
- 3: Gehäuse
- 4: Leuchtfläche
- 5_1 .. 5_n:: Teilbereich der Leuchtfläche
- 7, 27: Laufrichtung des Lauflichteffekts
- 6, 26, 36, 66: Symbol
- 8: Lichtquelle
- 9: Leuchtrichtung
- 10: Anstrahlrichtung
- 46_1 .. 46_7: Alphanumerische Zeichen zur Darstellung eines Markennamens
- 56: Symbol
- 56_1 .. 56_3: Teilelemente des Symbols
- 81: Lichtleiter

## Patentansprüche

1. Verfahren zum Betreiben einer Blinkleuchte (1) eines Kraftfahrzeugs, bei dem eine Leuchtfläche (4) der Blinkleuchte (1) zum Signalisieren eines Fahrtrichtungswechsels derart angesteuert wird, dass ein Lauflichteffekt (7, 27) erzielt wird, wobei zur Erzielung des Lauflichteffekts mindestens ein Symbol (6, 26, 36, 56, 66) auf der Leuchtfläche (4) angezeigt wird, **dadurch gekennzeichnet, dass** das mindestens eine Symbol (6, 26, 36) ein die Fahrzeuggattung kennzeichnendes Symbol (6, 26, 36), insbesondere ein die Fahrzeuggattung darstellendes Piktogramm, umfasst.

2. Verfahren nach Anspruch 1, wobei das mindestens eine Symbol (6, 26, 36) ein Grafikelement (56), insbesondere einen Pfeil, umfasst.

3. Verfahren nach Anspruch 1 oder 2, wobei das mindestens eine Symbol (6, 26, 36) ein den Fahrzeughersteller kennzeichnendes Symbol (56), insbesondere ein Markenlogo, umfasst.

4. Verfahren nach einem der vorhergehenden Ansprüche, wobei eine Ausrichtung des Symbols (6, 26, 36) eine dem Blinkvorgang entsprechende Abbiegerichtung (7, 27) anzeigt.

5. Verfahren nach einem der vorhergehenden Ansprüche, wobei das mindestens eine Symbol (6, 26, 36) mehrere alphanumerische Zeichen umfasst, die zur Erzielung des Lauflichteffekts (7) in einem Blinkzyklus in einer vorbestimmten Reihenfolge nacheinander auf der Leuchtfläche (4) angezeigt werden und in der vorbestimmten Reihenfolge einen den Hersteller des Fahrzeugs kennzeichnenden oder das Fahrzeug kennzeichnenden Markennamen ergeben.

6. Verfahren nach einem der vorhergehenden Ansprüche, wobei die Leuchtfläche (4) ausgehend von einem ersten seitlichen Endbereich (5_1) bis zu einem gegenüber liegenden zweiten seitlichen Endbereich (5_n) in mehrere Teilbereiche (5_1 ... 5_n) unterteilt ist, in denen jeweils ein Symbol (6, 26, 36) anzeigbar ist.

7. Verfahren nach Anspruch 6, wobei zur Ausbildung der mehreren Teilbereiche (5_1 ... 5_n) eine Mehrzahl von wenigstens eine Leuchtdiode umfassenden LED-Gruppen in einer Reihe angeordnet ist.

8. Verfahren nach Anspruch 6 oder 7, wobei zur Ausbildung der mehreren Teilbereiche (5_1 . 5_n) eine Mehrzahl von Leuchtelementen in einer Reihe angeordnet ist, wobei die Leuchtelemente jeweils aus einem lichtdurchlässigen, lichtleitenden oder lichtreflektierenden Material gebildet sind und eine dem anzuzeigenden Symbol (6, 26, 36) entsprechende Formgebung aufweisen, wobei jedem Leuchtelement eine Beleuchtungseinrichtung zugeordnet ist, mittels derer jedes der Leuchtelemente wahlweise beleuchtet werden kann, so dass das Leuchtelement im beleuchteten Zustand als leuchtendes Symbol (6, 26, 36) in der Blinkleuchte (1) erscheint.

9. Verfahren nach einem der Ansprüche 1 bis 6, wobei die Leuchtfläche (4) als LED-Display ausgebildet ist.

10. Verfahren nach einem der vorhergehenden Ansprüche, wobei das auf der Leuchtfläche (4) angezeigte mindestens eine Symbol (6, 26, 36) in einem Blinkzyklus von einer Seite der Leuchtfläche (4) auf die andere Seite der Leuchtfläche (4) wandert.

11. Verfahren nach Anspruch 10, wobei mindestens zwei, vorzugsweise drei Symbole zur Erzeugung des Lauflichteffekts (7) in einem Blinkzyklus von einer Seite der Leuchtfläche (4) auf die andere Seite der Leuchtfläche (4) wandern und die mindestens zwei Symbole (6, 26, 36) dabei mit zueinander unterschiedlichen Leuchtstärken angezeigt werden, derart, dass das jeweils zur Erzeugung des Lauflichteffekt (7) zuletzt aktivierte Symbol (6, 26, 36) im Vergleich zum davor aktivierten Symbol (6, 26, 36) mit stärkerer Leuchtstärke angezeigt wird.

12. Verfahren nach einem der Ansprüche 1 bis 9, wenn abhängig von Anspruch 6, wobei in einem Blinkzyklus ausgehend von einem nicht leuchtenden Zustand aller Teilbereiche (5_1 ... 5_n) zunächst das mindestens eine einem ersten Teilbereich (5_1 ... 5_n) zugeordnete Symbol (6, 26, 36) in den leuchtenden Zustand übergeht, danach ausgehend hiervon der Reihe nach die Symbole (6, 26, 36) der in seitlicher Richtung nachfolgenden übrigen Teilbereiche (5_1 ... 5_n) nacheinander in den leuchtenden Zustand übergehen, bis die Symbole (6, 26, 36) in sämtlichen Teilbereichen (5_1 ... 5_n) sich im leuchtenden Zustand befinden, anschließend die Symbole (6, 26, 36) sämtlicher Teilbereiche (5_1 ... 5_n) für eine vorgegebene Zeitdauer im leuchtenden Zustand gehalten werden und schließlich Symbole (6, 26, 36) aller Teilbereiche (5_1 ... 5_n)wieder in den unbeleuchteten Zustand übergehen.

13. Blinkleuchte (1) eines Kraftfahrzeugs zur Anzeige eines Fahrtrichtungswechsels, umfassend eine Leuchtfläche (4); und
eine Steuereinrichtung (2), mittels derer die Leuchtfläche (4) zum Signalisieren eines Fahrtrichtungswechsels derart ansteuerbar ist, dass ein Lauflichteffekt (7) erzielt wird; **dadurch gekennzeichnet, dass** die Steuereinrichtung (2) ausgebildet ist, das Verfahren gemäß einer der Ansprüche 1 bis 12 durchzuführen.

14. Kraftfahrzeug, insbesondere Nutzfahrzeug, aufweisend mindestens eine Blinkleuchte (1) nach Anspruch 13.

## Claims

1. A method for operating a turn signal lamp (1) of a motor vehicle, in which a light-emitting surface (4) of the turn signal lamp (1) is controlled for signalling a change in driving direction in a manner such that a running light effect (7, 27) is produced, wherein, for producing the running light effect, at least one symbol (6, 26, 36, 56, 66) is displayed on the light-emitting surface (4), **characterized in that** the at least one symbol (6, 26, 36) comprises a symbol (6, 26, 36) characterizing the vehicle category, in particular a pictogram representing the vehicle category.

2. The method according to Claim 1, wherein the at least one symbol (6, 26, 36) comprises a graphic element (56), in particular an arrow.

3. The method according to Claim 1 or 2, wherein the at least one symbol (6, 26, 36) comprises a symbol (56) characterizing the vehicle manufacturer, in particular a brand logo.

4. The method according to one of the preceding claims, wherein an alignment of the symbol (6, 26, 36) indicates a turn direction (7, 27) corresponding to the turn signal operation.

5. The method according to one of the preceding claims, wherein the at least one symbol (6, 26, 36) comprises a plurality of alphanumerical characters that are displayed in one turn signal cycle in a predetermined order, one after the other, on the light-emitting surface (4) for producing the running light effect (7) and form, in the predetermined order, a brand name characterizing the manufacturer of the vehicle or characterizing the vehicle.

6. The method according to one of the preceding claims, wherein the light-emitting surface (4) is divided, proceeding from a first lateral end region (5_1) to a second lateral end region (5_n), which is located opposite the former, into a plurality of partial regions (5_1...5_n), in each of which a symbol (6, 26, 36) is displayable.

7. The method according to Claim 6, wherein a plurality of LED groups comprising at least one light-emitting diode are arranged in a row to form the plurality of partial regions (5_1...5_n).

8. The method according to Claim 6 or 7, wherein a plurality of light-emitting elements are arranged in a row to form the plurality of partial regions (5_1...5_n), wherein the light-emitting elements are made in each case from a light-transmissive, light-guiding or light-reflective material and have a shape that corresponds to the symbol (6, 26, 36) to be displayed, wherein each light-emitting element is assigned an illumination device, by means of which each of the light-emitting elements can be selectively illuminated in a manner such that the light-emitting element in the illuminated state appears as a luminous symbol (6, 26, 36) in the turn signal lamp (1).

9. The method according to one of Claims 1 to 6, wherein the light-emitting surface (4) is embodied in the form of an LED display.

10. The method according to one of the preceding claims, wherein the at least one symbol (6, 26, 36) displayed on the light-emitting surface (4) migrates in a turn signal cycle from one side of the light-emitting surface (4) to the other side of the light-emitting surface (4).

11. The method according to Claim 10, wherein at least two, preferably three symbols migrate in a turn signal cycle from one side of the light-emitting surface (4) to the other side of the light-emitting surface (4) to create the running light effect (7) and the at least two symbols (6, 26, 36) are displayed during this process with mutually different luminosity levels such that the symbol (6, 26, 36) that was respectively activated last to create the running light effect (7) is displayed with a greater luminosity than the symbol (6, 26, 36) that was activated before.

12. The method according to one of Claims 1 to 9, if dependent on Claim 6, wherein, in one turn signal cycle, starting from a non-luminous state of all partial regions (5_1... 5_n), initially the at least one symbol (6, 26, 36) assigned to a first partial region (5 1 ... 5 n) transitions into the luminous state, then, proceeding from this, one after the other, the symbols (6, 26, 36) of the remaining partial regions (5_1... 5_n), which follow in the lateral direction, transition successively into the luminous state, until the symbols (6, 26, 36) in all partial regions (5 1 ... 5_n) are in the luminous state, subsequently the symbols (6, 26, 36) of all partial regions (5 1 ... 5 n) are kept in the luminous state for a predetermined duration, and finally symbols (6, 26, 36) of all partial regions (5_1...5_n) return to the non-luminous state.

13. A turn signal lamp (1) of a motor vehicle for indicating a change in driving direction, comprising a light-emitting surface (4); and
a control device (2), with which the light-emitting surface (4) is controllable for signalling a change in driving direction in a manner such that a running light effect (7) is produced, **characterized in that** the control device (2) is embodied to carry out the method according to one of Claims 1 to 12.

14. A motor vehicle, in particular a commercial vehicle, having at least one turn signal lamp (1) according to Claim 13.

## Revendications

1. Procédé d'exploitation d'un clignotant (1) d'un véhicule automobile, dans lequel, pour signaler un changement du sens de la marche, une surface lumineuse (4) du clignotant (1) est pilotée de façon à obtenir un effet de chenillard (7, 27), au moins un symbole (6, 26, 36, 56, 66) étant affiché sur la surface lumineuse (4) pour obtenir l'effet de chenillard, **caractérisé en ce que** ledit au moins un symbole (6, 26, 36) comprend un symbole (6, 26, 36) caractérisant le type de véhicule, en particulier un pictogramme représentant le type de véhicule.

2. Procédé selon la revendication 1, dans lequel ledit au moins un symbole (6, 26, 36) comprend un élément graphique (56), en particulier une flèche.

3. Procédé selon la revendication 1 ou 2, dans lequel ledit au moins un symbole (6, 26, 36) comprend un symbole (56) caractérisant le fabricant du véhicule, en particulier un logo de la marque.

4. Procédé selon l'une quelconque des revendications précédentes, dans lequel une orientation du symbole (6, 26, 36) indique une direction de manœuvre (7, 27) correspondant au processus de clignotement.

5. Procédé selon l'une quelconque des revendications précédentes, dans lequel ledit au moins un symbole (6, 26, 36) comprend plusieurs caractères alphanumériques qui, pour obtenir l'effet de chenillard (7), sont affichés dans un cycle de clignotement dans un ordre prédéterminé les uns après les autres sur la surface lumineuse (4), et produisent dans l'ordre prédéterminé un nom de marque caractérisant le fabricant du véhicule ou caractérisant le véhicule.

6. Procédé selon l'une quelconque des revendications précédentes, dans lequel, en partant d'une première zone d'extrémité latérale (5_1) jusqu'à une deuxième zone d'extrémité latérale opposée (5_n), la surface lumineuse (4) est divisée en plusieurs zones partielles (5_1... 5_n) dans lesquelles respectivement un symbole (6, 26, 36) peut être affiché.

7. Procédé selon la revendication 6, dans lequel, pour réaliser les plusieurs zones partielles (5_1... 5_n), une pluralité de groupes de DEL comprenant au moins une diode électroluminescente est disposée en une rangée.

8. Procédé selon la revendication 6 ou 7, dans lequel, pour réaliser les plusieurs zones partielles (5_1... 5_n), une pluralité d'éléments lumineux est disposée en une rangée, les éléments lumineux étant respectivement formés à partir d'un matériau laissant passer la lumière, guidant la lumière ou réfléchissant la lumière, et présentant une configuration correspondant au symbole (6, 26, 36) à afficher, chaque élément lumineux étant associé à un dispositif d'éclairage permettant d'éclairer chacun des éléments lumineux au choix de sorte qu'à l'état éclairé, l'élément lumineux apparaît comme un symbole (6, 26, 36) illuminé dans le clignotant (1).

9. Procédé selon l'une quelconque des revendications 1 à 6, dans lequel la surface lumineuse (4) est réalisée sous la forme d'un affichage à DEL.

10. Procédé selon l'une quelconque des revendications précédentes, dans lequel ledit au moins un symbole (6, 26, 36) affiché sur la surface lumineuse (4) chemine dans un cycle de clignotement d'un côté de la surface lumineuse (4) à l'autre côté de la surface lumineuse (4) .

11. Procédé selon la revendication 10, dans lequel au moins deux, de préférence trois symboles, destinés à générer l'effet de chenillard (7), cheminent dans un cycle de clignotement d'un côté de la surface lumineuse (4) à l'autre côté de la surface lumineuse (4), et les au moins deux symboles (6, 26, 36) sont alors affichés avec différentes luminosités les uns par rapport aux autres de telle sorte que le symbole (6, 26, 36) activé respectivement en dernier pour générer l'effet de chenillard (7) est affiché avec une luminosité supérieure en comparaison avec le symbole (6, 26, 36) activé avant celui-ci.

12. Procédé selon l'une quelconque des revendications 1 à 9 lorsqu'elle dépend de la revendication 6, dans lequel, dans un cycle de clignotement, en partant d'un état non illuminé de toutes les zones partielles (5 1 ... 5_n), d'abord ledit au moins un symbole (6, 26, 36) associé à une première zone partielle (5_1... 5_n) passe à l'état illuminé, ensuite, en partant de celui-ci, dans l'ordre, les symboles (6, 26, 36) des autres zones partielles (5_1... 5_n) suivant dans la direction latérale passent les uns après les autres à l'état illuminé jusqu'à ce que les symboles (6, 26, 36) dans toutes les zones partielles (5_1... 5_n) se trouvent à l'état illuminé, ensuite, les symboles (6, 26, 36) de toutes les zones partielles (5 1 ... 5_n) sont maintenues à l'état illuminé pendant une durée prédéfinie, et enfin les symboles (6, 26, 36) de toutes les zones partielles (5_1... 5_n) repassent à l'état non illuminé.

13. Clignotant (1) d'un véhicule automobile permettant d'afficher un changement du sens de la marche, comprenant
une surface lumineuse (4) ; et
un dispositif de commande (2) au moyen duquel la surface lumineuse (4) peut être pilotée pour signaler un changement du sens de la marche de façon à obtenir un effet de chenillard (7) ;
**caractérisé en ce que** le dispositif de commande (2) est réalisé pour effectuer le procédé selon l'une quelconque des revendications 1 à 12.

14. Véhicule automobile, en particulier véhicule utilitaire, présentant au moins un clignotant (1) selon la revendication 13.
